# EUROPÄISCHE PATENTSCHRIFT

(11) **EP 3 134 694 B1**
(45) Veröffentlichungstag und Bekanntmachung des Hinweises auf die Patenterteilung: **24.01.2018**
(21) Anmeldenummer: 15720009.8
(22) Anmeldetag: 23.04.2015
(51) Int. Cl.: F27D 17/00, F22B 1/18, F22B 3/04

(54) **VERFAHREN UND ANLAGE ZUR NUTZUNG DER ABWÄRME AUS ABGASEN ZUR DAMPFGEWINNUNG**
METHOD AND ASSEMBLY FOR USING WASTE HEAT FROM EXHAUST GASES FOR THE PRODUCTION OF STEAM
PROCÉDÉ ET INSTALLATION DESTINÉS À L'UTILISATION DE LA CHALEUR DISSIPÉE DES GAZ D'ÉCHAPPEMENT DANS LA PRODUCTION DE VAPEUR

(30) Priorität: 24.04.2014 EP 14165875
(43) Veröffentlichungstag der Anmeldung: 01.03.2017
(73) Patentinhaber: Primetals Technologies Austria GmbH, 4031 Linz (AT)
(72) Erfinder: ENICKL, Gerhard, 4407 Dietach (AT); PATREJKO, Andreas, 4222 St. Georgen an der Gusen (AT)
(74) Vertreter: Metals@Linz
(86) Internationale Anmeldenummer: PCT/EP2015/058743
(87) Internationale Veröffentlichungsnummer: WO 2015/162190

(56) Entgegenhaltungen:
- EP-A1- 1 944 404
- US-A1- 2012 320 941

## Beschreibung

### GEBIET DER ERFINDUNG

Die Erfindung betrifft ein Verfahren zur Nutzung der Abwärme aus Abgasen, nämlich aus Rauchgasen der Metall- oder Stahlerzeugung, insbesondere den Rauchgasen eines Lichtbogenofens oder eines Sauerstoffblaskonverters, zur Dampfgewinnung, wobei mit Wasser durchströmte Kühlflächen von den Abgasen beheizt werden, sowie eine entsprechende Anlage.

Der Lichtbogenofen, genauer Elektrolichtbogenofen, ist ein Ofen zum Einschmelzen von Stahlschrott zur erneuten Verwendung als Stahl-Neuprodukt.

Der Sauerstoffblaskonverter ist ein Tiegel, in dem durch Zuführung von Sauerstoff in verflüssigtes Roheisen überschüssiger Kohlenstoff herausoxidiert wird, wodurch das Roheisen zu Stahl wird.

Die Erfindung ist aber nicht nur auf Abgase oder Rauchgase in der Stahl- oder allgemeiner in der Metallerzeugung anwendbar, sondern generell auf heiße Abgase.

### STAND DER TECHNIK

Aus der US 2012/0320941 A1 ist es bekannt, die Rauchgase aus einem Elektrolichtbogenofen zur Beheizung eines Abhitzekessels zu verwenden, der Dampf für eine Dampfturbine erzeugt. Die Rauchgasleitung aus dem Elektrolichtbogenofen mündet in eine wassergekühlte Leitung, welche wassergekühlte Rohre umfasst, welche die Kühlflächen des Abhitzekessels bilden. Das Kühlwasser wird in den Rohren erhitzt und als gesättigter Dampf in einer Dampftrommel zur Weiterverwendung in der Dampfturbine gespeichert.

In der Regel wird in der Sekundärmetallurgie die Stahlschmelze aus dem Lichtbogenofen oder dem Sauerstoffblaskonverter für das Gießen fertig behandelt, etwa in einer Vakuumanlage. Da hier oft die Vakuumentgasung eingesetzt wird, wird punktuell Wasserdampf benötigt. Dieser kann aus einem bestehenden Dampfkreislauf im Stahlwerk, etwa auch aus dem Dampfkreislauf, wie er in der US 2012/0320941 A1 geoffenbart ist, entnommen werden. Eine andere Lösung wäre, die Vakuumentgasung mittels mechanischer Vakuumpumpen durchzuführen.

Falls für die Vakuumentgasung Wasserdampf verwendet werden soll, jedoch kein Dampfkreislauf besteht oder angezapft werden kann, wäre es unwirtschaftlich, einen eigenen Dampfkreislauf mit Abhitzekessel und Dampftrommel zu bauen, dessen Dampf nur für die Vakuumentgasung verwendet wird. Denn für die Vakuumentgasung wird nur periodisch eine beschränkte Menge Dampf benötigt.

### DARSTELLUNG DER ERFINDUNG

Es ist daher eine Aufgabe der Erfindung, ein Verfahren zur Nutzung der Abwärme aus Abgasen, nämlich den Rauchgasen der Metall- oder Stahlerzeugung, zur Dampfgewinnung zur Verfügung zu stellen, das ohne einen Dampfkreislauf auskommt.

Die Aufgabe wird durch ein Verfahren nach Anspruch 1 gelöst, bei dem mit Wasser durchströmte Kühlflächen von den Abgasen beheizt werden, wobei das in den Kühlflächen erhitzte Wasser unter Druckbeaufschlagung als Heißwasser in zumindest einem Heißwasserspeicher gespeichert wird, und erst durch Entspannung des Heißwassers bei Entnahme aus dem Heißwasserspeicher Dampf hergestellt wird, welcher zumindest einem Dampfabnehmer, etwa der Stahlerzeugung, zugeführt Z wird, wobei zur Vermeidung von Dampfbildung im Heißwasserspeicher die Temperatur des Heißwassers im Heißwasserspeicher auf einen Wert geregelt wird, der unterhalb oder auf der Siedetemperatur liegt, und zumindest ein Teil des in den Kühlflächen erhitzten Wassers in einem Wärmetauscher abgekühlt und anschließend wieder den Kühlflächen als Kühlwasser zugeleitet wird. Statt eines Dampfkreislaufs wird also ein Heißwasserkreislauf vorgesehen, der benötigte Dampf wird erst bei Entnahme von Heißwasser durch Entspannung des unter Druck stehenden Heißwassers erzeugt. Damit entfällt die bei Dampfkreisläufen übliche Dampftrommel. Das erfindungsgemäße Verfahren arbeitet mit einem wassergekühlten System, das im Aufbau einfacher ist als ein System, das Dampf enthält. Wassergekühlte Abgasstrecken haben darüber hinaus den Vorteil, dass sie nicht steigend verlegt werden müssen.

Der durch das erfindungsgemäße Verfahren aus der Abwärme von Rauchgasen der Metall- oder Stahlerzeugung, z.B. aus Rauchgasen eines Lichtbogenofens oder eines Sauerstoffblaskonverters, erzeugte Dampf wird zumindest teilweise, in der Regel hauptsächlich, zur Vakuumentgasung von Stahlschmelze (oder einer anderen Metallschmelze) verwendet werden. Alternativ, abwechselnd oder zusätzlich könnte der Dampf zumindest teilweise in ein bestehendes Dampfnetz, etwa zur Strom- oder Fernwärmeerzeugung, eingebracht werden.

Bei der Vakuumentgasung kommt eine Wasserdampfstrahl-Vakuumpumpe zum Einsatz. Der Treibdampf ist Wasserdampf mit einem Ruhedruck bis zu etwa 2 MPa (20 bar). Die Treibdüse ist meist als Laval-Düse ausgeführt, so dass hinter dem engsten Querschnitt Überschallgeschwindigkeit auftritt. Die Pumpwirkung wird durch den Strahl des Treibdampfs erzeugt, der durch Impulsaustausch Gas ansaugt, beschleunigt und dadurch fördert, wodurch ein Unterdruck und schließlich ein Vakuum erzeugt wird.

Damit das in den Kühlflächen erhitzte Wasser nicht verdampft, muss es unter hohem Druck gehalten werden. Da die maximale Abgastemperatur nach Anlagen zur Stahlerzeugung, insbesondere nach einem Lichtbogenofen oder einem Sauerstoffblaskonverter, bis 1600 °C betragen kann, muss es in diesem Fall auf einem Druck größer 1 MPa, insbesondere im Bereich von 2,5 bis 5 MPa, gehalten werden.

Bei der Herstellung des Dampfs erfolgt die Entspannung des entnommenen Heißwassers entlang der Siedelinie aus dem Heißwasserspeicher. Die Siedelinie bilden jene Temperatur-Druck-Wertepaare in einem Phasendiagramm, die an der Phasengrenzlinie Gas-Flüssigkeit liegen. Sie wird auch als Siedepunktskurve, Siedekurve, Siededruckkurve oder Siedepunktkurve bezeichnet.

Wenn die durch das Ab- oder Rauchgas an die Kühlflächen abgegebene Wärmemenge größer ist als die Wärmemenge, die für die Heißwasserbereitung im Heißwasserspeicher benötigt wird, wird, wie oben beschrieben, ein Teil des in den Kühlflächen erhitzten Wassers in einem Wärmetauscher abgekühlt und anschließend wieder den Kühlflächen als Kühlwasser zugeleitet. Die abgezogene Wärme kann beispielsweise einem Kühlturm oder einem Fernwärmenetz zugeführt oder zum Vorwärmen von Prozesswasser verwendet werden.

Zur Vermeidung von Dampfbildung im Heißwasserspeicher wird, wie oben beschrieben, vorgesehen, dass die Temperatur des Heißwassers im Heißwasserspeicher auf einen Wert geregelt wird, der unterhalb oder auf der Siedetemperatur liegt. Es wäre auch denkbar, stattdessen den Druck im Heißwasserkreislauf zu erhöhen.

Die für die Dampfherstellung entnommene Wassermenge kann durch Speisewasser, das den Kühlflächen zugeführt wird, ersetzt werden.

Falls statt einem Heißwasserspeicher, der allen Kühlflächen gemeinsam ist, mehrere parallel geschaltete Heißwasserspeicher vorgesehen sind, kann das in den Kühlflächen erhitzte Wasser mehreren parallel geschalteten Heißwasserspeichern zugeführt werden. Dies hat den Vorteil, dass der Dampf flexibel verwertet werden kann. Dabei wird ein Heißwasserspeicher jeweils von einer oder mehreren Kühlflächen erhitzt, die nur mit diesem Heißwasserspeicher verbunden sind.

Eine Anlage zur Durchführung des erfindungsgemäßen Verfahrens wird im unabhängigen Anspruch 10 ausgeführt und umfasst erfindungsgemäß
- einen Abgaskanal zum Ableiten von Abgasen, nämlich Rauchgasen der Metall- oder Stahlerzeugung, mit Kühlflächen, die mit Wasser durchströmt und von den Abgasen beheizt werden können, und ist dadurch gekennzeichnet, dass
- zumindest ein Heißwasserspeicher vorgesehen ist, der mit den Kühlflächen verbunden und geeignet ist, das in den Kühlflächen erhitzte Wasser unter Druckbeaufschlagung als Heißwasser zu speichern, sowie
- eine Entnahmeeinrichtung zur Entnahme von Heißwasser, die so ausgebildet ist, dass durch Entspannung des Heißwassers bei Entnahme aus dem Heißwasserspeicher Dampf hergestellt wird, sowie
- eine Verbindungsleitung zwischen Entnahmeeinrichtung und zumindest einem Dampfabnehmer,
- wobei eine Temperaturregelung zur Regelung der Temperatur des Heißwassers im Heißwasserspeicher vorgesehen ist und die Temperaturregelung so ausgebildet ist, dass zur Vermeidung von Dampfbildung im Heißwasserspeicher die Temperatur des Heißwassers im Heißwasserspeicher auf einen Wert geregelt wird, der unterhalb oder auf der Siedetemperatur liegt, und
- ein Wärmetauscher vorgesehen ist, sodass zumindest ein Teil des in den Kühlflächen erhitzten Wassers abgekühlt und anschließend wieder den Kühlflächen als Kühlwasser zugeleitet werden kann.
Die erfindungsgemäße Anlage kann insbesondere umfassen
- eine Anlage zur Stahl- oder Metallerzeugung, insbesondere einen Lichtbogenofen oder einen Sauerstoffblaskonverter,
- einen als Rauchgaskanal ausgebildeten Abgaskanal zum Ableiten der Rauchgase aus der Anlage zur Stahl- oder Metallerzeugung, mit Kühlflächen, die mit Wasser durchströmt und von den Rauchgasen beheizt werden können, sowie
- eine Verbindungsleitung zwischen der Entnahmeeinrichtung einerseits und der Vakuumentgasungsanlage der Anlage zur Stahl- oder Metallerzeugung und/oder einem anderen Dampfabnehmer andererseits.

Um die für die Dampfherstellung entnommene Wassermenge durch Speisewasser, das den Kühlflächen zugeführt wird, ersetzen zu können, kann ein Speisewasserbehälter vorgesehen sein, aus welchem den Kühlflächen Speisewasser zugeführt werden kann.

Statt eines Heißwasserspeichers können, wie bereits erläutert, in einer erfindungsgemäßen Anlage auch mehrere parallel geschaltete Heißwasserspeicher vorgesehen sein.

Die erfindungsgemäße Anlage kann im Falle eines Stahlwerks bei jedem einzelnen Lichtbogenofen oder

Sauerstoffblaskonverter für die Dampferzeugung zum Einsatz kommen, auch wenn dort kein Dampfnetz vorhanden ist.

Das erfindungsgemäße Verfahren bzw. die erfindungsgemäße Anlage kann darüber hinaus bei jedem konventionellen Abhitzekessel zum Einsatz kommen.

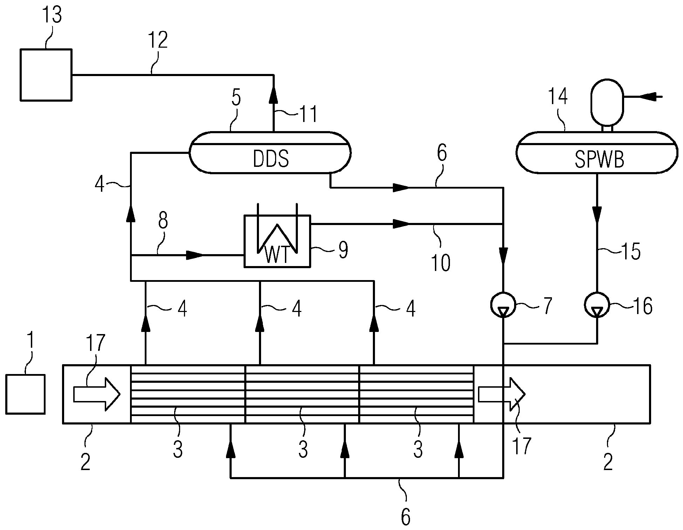

### KURZE BESCHREIBUNG DER FIGUR

Die Erfindung wird im Folgenden anhand der beispielhaften und schematischen Figur näher erläutert, welche ein Anlagenschema einer erfindungsgemäßen Anlage zeigt.

### WEGE ZUR AUSFÜHRUNG DER ERFINDUNG

Die erfindungsgemäße Anlage umfasst eine Anlage 1 zur Stahl- oder Metallerzeugung, z.B. einen Lichtbogenofen oder einen Sauerstoffblaskonverter. Die Rauchgase aus der Anlage 1 zur Stahlerzeugung werden in einen Rauchgaskanal 2 geleitet, in welchem eine oder mehrere Kühlflächen 3 angeordnet sind, die vom Rauchgas beheizt werden. Die Kühlflächen 3 werden von Wasser aus dem Heißwasserkreislauf durchströmt. Der Heißwasserkreislauf besteht aus den Kühlflächen 3, aus den Verbindungsleitungen 4, die das in den Kühlflächen 3 erhitzte Wasser zum Heißwasserspeicher 5 leiten, aus dem Heißwasserspeicher 5 und aus den Verbindungsleitungen 6, mit welchen abgekühltes Heißwasser zum erneuten Erhitzen wieder in die Kühlflächen 3 geleitet wird. In der Verbindungsleitung 6 kann eine Pumpe 7 vorgesehen sein, die das abgekühlte Heißwasser in die Kühlflächen 3 pumpt.

Von der Verbindungsleitung 4 zum Heißwasserspeicher 5 zweigt eine Zuleitung 8 zu einem Wärmetauscher 9 ab, sodass ein Teil des in den Kühlflächen 3 erhitzten Wassers - oder bei fehlendem Dampfbedarf bei der Stahlerzeugung das gesamte erhitzte Wasser - abgekühlt und anschließend wieder über Ableitung 10 und mittels Pumpe 7 über die Verbindungsleitung 6 wieder den Kühlflächen 3 als Kühlwasser zugeleitet werden kann.

Der Heißwasserspeicher 5 sowie die übrigen Bestandteile des Heißwasserkreislaufs (Verbindungsleitungen 4, 6, Kühlflächen 3) müssen so ausgeführt sein, dass das in den Kühlflächen erhitzte Wasser unter Druckbeaufschlagung als Heißwasser im Heißwasserspeicher 5 gespeichert werden kann, müssen also einem Druck größer 1 MPa, insbesondere im Bereich von 2,5 bis 5 MPa, standhalten können. Der Heißwasserspeicher 5 weist eine Entnahmeeinrichtung 11 zur Entnahme von Heißwasser bzw. Dampf auf, die so ausgebildet ist, dass durch Entspannung des Heißwassers bei Entnahme aus dem Heißwasserspeicher 5 Dampf hergestellt wird. Über eine Verbindungsleitung 12 wird der erzeugte Dampf von der Entnahmeeinrichtung 11 zur Vakuumentgasungsanlage 13 geleitet, die Bestandteil der Anlage 1 zur Stahlerzeugung sein kann. Alternativ kann der Dampf aus der Entnahmeeinrichtung 11 auch einem oder mehreren anderen Dampfabnehmern zugeführt werden, zum Beispiel einem bestehenden Dampfnetz, etwa zur Strom- oder Fernwärmeerzeugung. Es kann auch vorgesehen sein, dass der erzeugte Dampf in einem Zeitraum der Vakuumentgasungsanlage 13 zugeführt wird, wenn diese nämlich gerade arbeitet und Dampf benötigt, und in einem nachfolgenden Zeitraum, wenn die Vakuumentgasungsanlage 13 nicht in Betrieb ist, einem anderen Dampfabnehmer.

Statt eines Heißwasserspeichers 5 können auch mehrere parallel geschaltete Heißwasserspeicher 5 vorgesehen sein. Dabei würde dann jeder Heißwasserspeicher 5 nur von einer (oder mehreren) bestimmten Heizflächen 3 beheizt werden. Von jedem Heißwasserspeicher 5 könnte dann über eine jeweils eigene Entnahmeeinrichtung 11 Heißwasser bzw. Dampf entnommen werden und einem jeweils anderen Dampfabnehmer zugeführt werden. Es wäre auch möglich, alle Entnahmeeinrichtungen 11 in eine gemeinsame Verbindungsleitung 12 für Dampf münden zu lassen, sodass der Dampf einem Dampfabnehmer zugeführt wird.

Dieser könnte dann zeitlich aufeinanderfolgend von verschiedenen Heißwasserspeichern 5 mit Dampf versorgt werden.

Für den bzw. die Heißwasserspeicher 5 ist eine Temperaturregelung zur Regelung der Temperatur des Heißwassers im Heißwasserspeicher 5 vorgesehen, die hier nicht dargestellt ist.

Um die für die Dampfherstellung entnommene Wassermenge ersetzen zu können, ist ein Speisewasserbehälter 14 vorgesehen, aus welchem den Kühlflächen 3 über eine Verbindungsleitung 15, die eine Pumpe 16 enthält und in die Verbindungsleitung 6 mündet, Speisewasser zugeführt werden kann.

Wenn Rauchgas 17 aus der Anlage 1 zur Stahlerzeugung mit etwa 1600 °C durch den Rauchgaskanal 2 strömt, wird das Kühlwasser in den Kühlflächen 3 erhitzt und steigt über de Verbindungsleitungen 4 in den Heißwasserspeicher 5 auf. Dort wird es auf einem Druck von größer 1 MPa, insbesondere im Bereich von 2,5 bis 5 MPa, gehalten, indem laufend die Temperatur des Heißwassers gemessen wird. Der Heißwasserspeicher 5 enthält somit keinen Wasserdampf, sondern nur Wasser.

Bei Annäherung der Temperatur im Heißwasserspeicher 5 an die Siedelinie wird die Zufuhr von Heißwasser aus dem Kühlflächen 3 in den Heißwasserspeicher 5 reduziert oder gesperrt. Das ganze Heißwasser oder ein Teil davon wird dann aus dem Kühlflächen 3 über die Zuleitung 8 dem Wärmetauscher 9 zugeführt und dort abgekühlt.

Wenn Dampf benötigt wird, wird die Entnahmeeinrichtung 11 betätigt, sodass Heißwasser aus dem Heißwasserspeicher 5 austritt, wobei dieses durch die Expansion in der Entnahmeeinrichtung 11 verdampft. Bei der Entspannung des entnommenen Heißwassers wird entlang der Siedelinie gearbeitet.

### Bezugszeichenliste:

- 1: Anlage zur Stahlerzeugung
- 2: Rauchgaskanal
- 3: Kühlfläche
- 4: Verbindungsleitung zum Heißwasserspeicher 5
- 5: Heißwasserspeicher
- 6: Verbindungsleitung vom Heißwasserspeicher 5
- 7: Pumpe
- 8: Zuleitung
- 9: Wärmetauscher
- 10: Ableitung
- 11: Entnahmeeinrichtung zur Entnahme von Heißwasser
- 12: Verbindungsleitung für Dampf
- 13: Vakuumentgasungsanlage
- 14: Speisewasserbehälter
- 15: Verbindungsleitung
- 16: Pumpe
- 17: Rauchgas

## Patentansprüche

1. Verfahren zur Nutzung der Abwärme aus Abgasen, nämlich aus Rauchgasen der Metall- oder Stahlerzeugung, zur Dampfgewinnung, wobei mit Wasser durchströmte Kühlflächen (3) von den Abgasen beheizt werden, **dadurch gekennzeichnet, dass** das in den Kühlflächen (3) erhitzte Wasser unter Druckbeaufschlagung als Heißwasser in zumindest einem Heißwasserspeicher (5) gespeichert wird, und erst durch Entspannung des Heißwassers bei Entnahme aus dem Heißwasserspeicher Dampf hergestellt wird, welcher zumindest einem Dampfabnehmer zugeführt wird, wobei zur Vermeidung von Dampfbildung im Heißwasserspeicher (5) die Temperatur des Heißwassers im Heißwasserspeicher auf einen Wert geregelt wird, der unterhalb oder auf der Siedetemperatur liegt, und zumindest ein Teil des in den Kühlflächen (3) erhitzten Wassers in einem Wärmetauscher (9) abgekühlt und anschließend wieder den Kühlflächen (3) als Kühlwasser zugeleitet wird.

2. Verfahren nach Anspruch 1, **dadurch gekennzeichnet, dass** die Abwärme aus den Rauchgasen (17) der Metall- oder Stahlerzeugung genutzt wird, wobei der hergestellte Dampf wieder der Stahlerzeugung zugeführt wird.

3. Verfahren nach Anspruch 1 oder 2, **dadurch gekennzeichnet, dass** die Abwärme aus Rauchgasen (17) eines Lichtbogenofens oder eines Sauerstoffblaskonverters genutzt wird.

4. Verfahren nach einem der Ansprüche 1 bis 3, **dadurch gekennzeichnet, dass** der Dampf zumindest teilweise zur Vakuumentgasung von Stahlschmelze verwendet wird.

5. Verfahren nach einem der Ansprüche 1 bis 4, **dadurch gekennzeichnet, dass** der Dampf zumindest teilweise in ein bestehendes Dampfnetz, etwa zur Strom- oder Fernwärmeerzeugung, eingebracht wird.

6. Verfahren nach einem der Ansprüche 1 bis 5, **dadurch gekennzeichnet, dass** das in den Kühlflächen (3) erhitzte Wasser auf einem Druck größer 1 MPa, insbesondere im Bereich von 2,5 bis 5 MPa, gehalten wird.

7. Verfahren nach einem der Ansprüche 1 bis 6, **dadurch gekennzeichnet, dass** bei der Herstellung des Dampfs die Entspannung des entnommenen Heißwassers entlang der Siedelinie erfolgt.

8. Verfahren nach einem der Ansprüche 1 bis 7, **dadurch gekennzeichnet, dass** die für die Dampfherstellung entnommene Wassermenge durch Speisewasser, das den Kühlflächen (3) zugeführt wird, ersetzt wird.

9. Verfahren nach einem der Ansprüche 1 bis 8, **dadurch gekennzeichnet, dass** das in den Kühlflächen (3) erhitzte Wasser mehreren parallel geschalteten Heißwasserspeichern (5) zugeführt wird.

10. Anlage zur Durchführung des Verfahrens nach einem der Ansprüche 1 bis 9, umfassend zumindest
- einen Abgaskanal zum Ableiten von Abgasen, nämlich Rauchgasen der Metall- oder Stahlerzeugung, mit Kühlflächen (3), die mit Wasser durchströmt und von den Abgasen beheizt werden können, **dadurch gekennzeichnet, dass**
- zumindest ein Heißwasserspeicher (5) vorgesehen ist, der mit den Kühlflächen (3) verbunden und geeignet ist, das in den Kühlflächen erhitzte Wasser unter Druckbeaufschlagung als Heißwasser zu speichern, sowie
- eine Entnahmeeinrichtung (11) zur Entnahme von Heißwasser, die so ausgebildet ist, dass durch Entspannung des Heißwassers bei Entnahme aus dem Heißwasserspeichers (5) Dampf hergestellt wird, sowie
- eine Verbindungsleitung (12) zwischen Entnahmeeinrichtung (11) und zumindest einem Dampfabnehmer,
- wobei eine Temperaturregelung zur Regelung der Temperatur des Heißwassers im Heißwasserspeicher (5) vorgesehen ist und die Temperaturregelung so ausgebildet ist, dass zur Vermeidung von Dampfbildung im Heißwasserspeicher (5) die Temperatur des Heißwassers im Heißwasserspeicher auf einen Wert geregelt wird, der unterhalb oder auf der Siedetemperatur liegt, und
- ein Wärmetauscher (9) vorgesehen ist, sodass zumindest ein Teil des in den Kühlflächen (3) erhitzten Wassers abgekühlt und anschließend wieder den Kühlflächen (3) als Kühlwasser zugeleitet werden kann.

11. Anlage nach Anspruch 10, **dadurch gekennzeichnet, dass** diese zumindest umfasst
- eine Anlage zur Stahl- oder Metallerzeugung (1), insbesondere einen Lichtbogenofen oder einen Sauerstoffblaskonverter,
- einen als Rauchgaskanal (2) ausgebildeten Abgaskanal zum Ableiten der Rauchgase (17) aus der Anlage zur Stahl- oder Metallerzeugung, mit Kühlflächen (3), die mit Wasser durchströmt und von den Rauchgasen (17) beheizt werden können, sowie
- eine Verbindungsleitung (12) zwischen der Entnahmeeinrichtung (11) einerseits und einer Vakuumentgasungsanlage (13) der Anlage (1) zur Stahl- oder Metallerzeugung und/oder einem anderen Dampfabnehmer andererseits.

12. Anlage nach Anspruch 10 oder 11, **dadurch gekennzeichnet, dass** ein Speisewasserbehälter (14) vorgesehen ist, aus welchem den Kühlflächen (3) Speisewasser zugeführt werden kann.

13. Anlage nach einem der Ansprüche 10 bis 12, **dadurch gekennzeichnet, dass** mehrere parallel geschaltete Heißwasserspeicher (5) vorgesehen sind.

## Claims

1. Process for using the waste heat from exhaust gases, specifically from flue gases of metal or steel production for generating steam, wherein cooling surfaces (3) through which water flows are heated by the exhaust gases, **characterised in that** the water heated in the cooling surfaces (3) is stored under pressure as hot water in at least one hot water store (5) and steam is only generated through depressurisation of the hot water on removal from the hot water store, said steam being fed to at least one steam consumer,
wherein in order to prevent steam formation in the hot water store (5), the temperature of the hot water in the hot water store is regulated to a value that lies below or at the boiling point, and at least part of the water heated in the cooling surfaces (3) is cooled in a heat- exchanger (9) and is subsequently fed again to the cooling surfaces (3) as cooling water.

2. Process according to claim 1, **characterised in that** the waste heat from the flue gases (17) of the metal or steel production is used, wherein the steam produced is fed again to the steel production.

3. Process according to claim 1 or 2, **characterised in that** the waste heat from flue gases (17) of an electric arc furnace or an oxygen-blown converter is used.

4. Process according to one of claims 1 to 3, **characterised in that** the steam is used at least partially for vacuum degassing steel melts.

5. Process according to one of claims 1 to 4, **characterised in that** the steam is used at least partially in an existing steam network, for example for power or remote heat generation.

6. Process according to one of claims 1 to 5, **characterised in that** heated water is held in the cooling surfaces at a pressure of greater than 1 MPa, in particular in the range from 2.5 to 5 MPa.

7. Process according to one of claims 1 to 6, **characterised in that** during the production of the steam, the depressurisation of the removed hot water takes place along the bubble point curve.

8. Process according to one of claims 1 to 7,
**characterised in that** the water quantity removed for the steam generation is replaced by feed water that is fed to the cooling surfaces (3).

9. Process according to one of claims 1 to 8, **characterised in that** water heated in the cooling surfaces (3) is fed to a plurality of hot water stores (5) connected in parallel.

10. Installation for carrying out the process according to one of claims 1 to 9, comprising at least
- an exhaust gas channel for conducting away exhaust gases, specifically flue gases of metal or steel production, with cooling surfaces (3) through which water flows and which can be heated by the exhaust gases, **characterised in that**
- at least one hot water store (5) is provided which is connected to the cooling surfaces (3) and is suitable for storing the water heated in the cooling surfaces as hot water with the application of pressure, and
- an extraction device (11) for extracting hot water, which is configured so that by depressurisation of the hot water on extraction from the hot water store (5), steam is generated, and
- a connecting line (12) between the extraction device (11) and at least one steam consumer,
- wherein a temperature regulation is provided for regulating the temperature of the hot water in the hot water store (5) and the temperature regulation is embodied so that, in order to prevent steam formation in the hot water store (5), the temperature of the hot water in the hot water store is regulated to a value that lies below or at the boiling temperature, and
- a heat exchanger (9) is provided so that at least part of the water heated in the cooling surfaces (3) is cooled and can subsequently be fed again to the cooling surfaces (3) as cooling water.

11. Installation according to claim 10, **characterised in that** it comprises at least
- an installation for steel or metal production (1), in particular an electric arc furnace or an oxygen-blown converter,
- an exhaust gas channel configured as a flue gas channel (2) for removing the flue gases (17) from the installation for steel or metal production, having cooling surfaces (3) through which water flows and which can be heated by the flue gases (17), and
- a connecting line (12) between the extraction device (11) on one side and a vacuum degassing system (13) of the installation (1) for steel or metal production and/or another steam consumer on the other side.

12. Installation according to one of claims 10 or 11, **characterised in that** a feed water container (14) is provided from which the cooling water can be fed to the cooling surfaces (3).

13. Installation according to one of claims 10 to 12, **characterised in that** a plurality of hot water stores (5) connected in parallel is provided.

## Revendications

1. Procédé pour l'utilisation de la chaleur dissipée issue de gaz d'échappement, à savoir de gaz de combustion de la fabrication de métal ou d'acier, pour l'obtention de vapeur, dans lequel des surfaces de refroidissement (3) traversées par de l'eau sont chauffées par les gaz d'échappement, **caractérisé en ce que** l'eau chauffée dans les surfaces de refroidissement (3) est stockée sous forme d'eau chaude dans au moins un réservoir d'eau chaude (5) sous application de pression, et de la vapeur est tout d'abord produite par détente de l'eau chaude lors d'un prélèvement dans le réservoir d'eau chaude, laquelle est introduite dans au moins un consommateur de vapeur, dans lequel, pour éviter la formation de vapeur dans le réservoir d'eau chaude (5), la température de l'eau chaude dans le réservoir d'eau chaude est régulée à une valeur qui se situe au-dessous de ou à la température d'ébullition, et au moins une partie de l'eau chauffée dans les surfaces de refroidissement (3) est refroidie dans un échangeur de chaleur (9) et ensuite à nouveau amenée sous forme d'eau de refroidissement dans les surfaces de refroidissement (3).

2. Procédé selon la revendication 1, **caractérisé en ce que** la chaleur dissipée issue des gaz de combustion (17) de la fabrication de métal ou d'acier est utilisée, dans lequel la vapeur produite est à nouveau introduite dans la fabrication d'acier.

3. Procédé selon la revendication 1 ou la revendication 2, **caractérisé en ce que** la chaleur dissipée issue de gaz de combustion (17) d'un four à arc ou d'un convertisseur à soufflage d'oxygène est utilisée.

4. Procédé selon l'une des revendications 1 à 3, **caractérisé en ce que** la vapeur est utilisée au moins en partie pour le dégazage sous vide d'acier en fusion.

5. Procédé selon l'une des revendications 1 à 4, **caractérisé en ce que** la vapeur est apportée au moins en partie dans un réseau de vapeur existant, notamment pour la production d'électricité ou de chauffage urbain.

6. Procédé selon l'une des revendications 1 à 5, **caractérisé en ce que** l'eau chauffée dans les surfaces de refroidissement (3) est maintenue à une pression supérieure à 1 MPa, en particulier comprise dans la gamme allant de 2,5 à 5 MPa.

7. Procédé selon l'une des revendications 1 à 6, **caractérisé en ce que** la détente de l'eau chaude prélevée lors de la production de la vapeur s'effectue le long de la courbe d'ébullition.

8. Procédé selon l'une des revendications 1 à 7, **caractérisé en ce que** la quantité d'eau prélevée pour la production de vapeur est remplacée par de l'eau d'alimentation qui est introduite dans les surfaces de refroidissement (3).

9. Procédé selon l'une des revendications 1 à 8, **caractérisé en ce que** l'eau chauffée dans les surfaces de refroidissement (3) est introduite dans plusieurs réservoirs d'eau chaude (5) raccordés en parallèle.

10. Installation pour la mise en oeuvre du procédé selon l'une des revendications 1 à 9, comportant au moins
- un canal de gaz d'échappement pour l'évacuation de gaz d'échappement, à savoir de gaz de combustion de la fabrication de métal ou d'acier, avec des surfaces de refroidissement (3) qui peuvent être traversées par de l'eau et chauffées par les gaz d'échappement, **caractérisée en ce que**
- il est prévu au moins un réservoir d'eau chaude (5) qui est relié aux surfaces de refroidissement (3) et approprié pour stocker sous forme d'eau chaude l'eau chauffée dans les surfaces de refroidissement sous application de pression, ainsi que
- un dispositif de prélèvement (11) pour le prélèvement d'eau chaude, qui est conçu de telle sorte que de la vapeur soit produite par détente de l'eau chaude lors d'un prélèvement dans le réservoir d'eau chaude (5), ainsi que
- une conduite de raccordement (12) entre le dispositif de prélèvement (11) et au moins un consommateur de vapeur,
- dans laquelle une régulation de température est prévue pour la régulation de la température de l'eau chaude dans le réservoir d'eau chaude (5) et la régulation de température est conçue de telle sorte que, pour éviter la formation de vapeur dans le réservoir d'eau chaude (5), la température de l'eau chaude dans le réservoir d'eau chaude soit régulée à une valeur qui se situe au-dessous de ou à la température d'ébullition, et
- un échangeur de chaleur (9) est prévu de telle sorte qu'au moins une partie de l'eau chauffée dans les surfaces de refroidissement (3) puisse être refroidie et ensuite à nouveau amenée sous forme d'eau de refroidissement dans les surfaces de refroidissement (3).

11. Installation selon la revendication 10, **caractérisée en ce que** celle-ci comporte au moins
- une installation pour la fabrication d'acier ou de métal (1), en particulier un four à arc ou un convertisseur à soufflage d'oxygène,
- un canal de gaz d'échappement conçu sous la forme d'un canal de gaz de combustion (2) pour l'évacuation des gaz de combustion (17) de l'installation pour la fabrication d'acier ou de métal, avec des surfaces de refroidissement (3) qui peuvent être traversées par de l'eau et chauffées par les gaz de combustion (17), ainsi que
- une conduite de raccordement (12) entre le dispositif de prélèvement (11) d'une part et une installation de dégazage sous vide (13) de l'installation (1) pour la fabrication d'acier ou de métal et/ou un autre consommateur de vapeur d'autre part.

12. Installation selon la revendication 10 ou la revendication 11, **caractérisée en ce qu'**il est prévu un récipient d'eau d'alimentation (14) à partir duquel de l'eau d'alimentation peut être introduite dans les surfaces de refroidissement (3).

13. Installation selon l'une des revendications 10 à 12, **caractérisée en ce que** plusieurs réservoirs d'eau chaude (5) raccordés en parallèle sont prévus.
